(19) Europäisches Patentamt
European Patent Office
Office européen des brevets

(11) EP 3 913 010 B1

(12) EUROPEAN PATENT SPECIFICATION

(45) Date of publication and mention of the grant of the patent:
**19.06.2024 Bulletin 2024/25**

(21) Application number: **21175421.3**

(22) Date of filing: **21.05.2021**

(51) International Patent Classification (IPC):
***C08G 18/76*** *(2006.01)* ***C08G 18/48*** *(2006.01)*
***C09K 11/06*** *(2006.01)*

(52) Cooperative Patent Classification (CPC):
**C08G 18/7671; C08G 18/4833; C09K 11/06;**
C09K 2211/1007; C09K 2211/1014;
C09K 2211/1029

(54) **SIMPLIFIED METHOD FOR POLYURETHANE SYNTHESIS CONTROL BASED ON THE USE OF FLUORESCENT PROBES**

VEREINFACHTE METHODE ZUR KONTROLLE DER POLYURETHAN-SYNTHESE DURCH DEN EINSATZ VON FLUORESZENZSONDEN

MÉTHODE SIMPLIFIÉE DE CONTRÔLE DE LA SYNTHÈSE DES POLYURÉTHANES BASÉE SUR L'UTILISATION DE SONDES FLUORESCENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2020 IT 202000011911**

(43) Date of publication of application:
**24.11.2021 Bulletin 2021/47**

(73) Proprietor: **Università di Pisa**
**56126 Pisa (IT)**

(72) Inventors:
- **PUCCI, Andrea**
  **56126 PISA (IT)**
- **RUGGERI, Giacomo**
  **56126 PISA (IT)**
- **MINEI, Pierpaolo**
  **56126 PISA (IT)**
- **IASILLI, Giuseppe**
  **56126 PISA (IT)**

(74) Representative: **Banchetti, Marina et al**
**Barzanò & Zanardo Roma S.p.A.**
**Via Piemonte 26**
**00187 Roma (IT)**

(56) References cited:
**CN-A- 107 936 945**

- **SHUNJIE LIU ET AL: "In Situ Monitoring of RAFT Polymerization by Tetraphenylethylene-Containing Agents with Aggregation-Induced Emission Characteristics", ANGEWANDTE CHEMIE INTERNATIONAL EDITION, vol. 57, no. 21, 23 April 2018 (2018-04-23), pages 6274-6278, XP055767956, ISSN: 1433-7851, DOI: 10.1002/anie.201803268 & Shunjie Liu ET AL: "Supporting Information In Situ Monitoring of RAFT Polymerization by Tetraphenylethylene- Containing Agents with Aggregation-Induced Emission Characteristics Contents", , 6 April 2018 (2018-04-06), XP055768224, Retrieved from the Internet: URL:https://onlinelibrary.wiley.com/action /downloadSupplement?doi=10.1002/anie.20180 3268&file=anie201803268-sup-0001-misc_info rmation.pdf [retrieved on 2021-01-25]**
- **LI JINGFANG ET AL: "In situ monitoring of photopolymerization by photoinitiator with luminescence characteristics", JOURNAL OF PHOTOCHEMISTRY AND PHOTOBIOLOGY, A: CHEMISTRY, ELSEVIER SEQUOIA, LAUSANNE, CH, vol. 389, 8 November 2019 (2019-11-08), XP085958476, ISSN: 1010-6030, DOI: 10.1016/J.JPHOTOCHEM.2019.112225 [retrieved on 2019-11-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a simplified method for controlling the synthesis of polyurethanes based on the use of fluorescent probes. More specifically, the invention relates to a process for monitoring the progress of a solution polymerization reaction through a fluorescent probe sensitive to variations in viscosity dissolved in the reaction mixture. The probe has a behavior of the AIE type (aggregation-induced emission), and the viscosity trend in the system is quantified by monitoring the electric potential and without resorting to spectrofluorimeters.

### Background of the invention

As is known, polyurethanes are synthetic polymers characterized by the presence in the chain of urethane bonds -NH-(CO)-O-, obtainable through a synthesis that involves the chemical reaction between di-isocyanates or polyisocyanates (containing two or more -N=C=O groups in the molecule) and polyols (containing two or more -OH groups, in particular polyether polyols or polyether polyols). The synthesis occurs according to the following scheme:

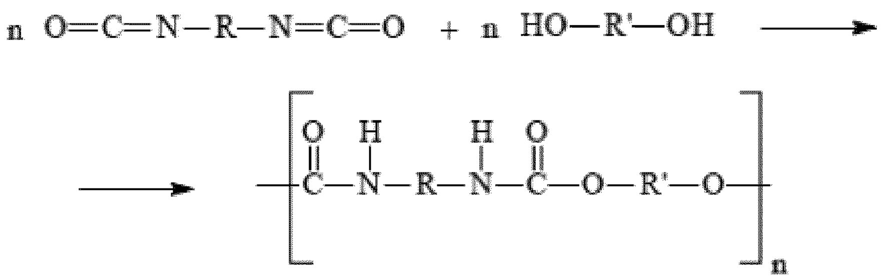

Through the appropriate selection of the two reactive compounds and the catalysts and additives used, as well as the synthesis and processing technologies adopted, the characteristics of the polyurethanes obtained can vary greatly, resulting in completely different materials.

Firstly, different materials are obtained depending on whether the so-called foaming or the synthesis in reactors is carried out. In the first case, these are single-stage processes, in which the two starting monomers (one of which premixed with the other auxiliary components) are reacted in the presence of a blowing agent, generally a hydrocarbon, $CO_2$ or other mixtures. These processes make it possible to obtain all those products classified in general as "foams", which have very different characteristics and qualities. The latter range from the softness of flexible low-density foams for cushions and mattresses to the extraordinary resistance to bending and sliding stresses of compact foam systems for shoe soles, or the excellent thermal insulation properties of rigid foams for panels and building coatings and insulation.

In the case of synthesis in reactor, the processes are generally more or less complex, and are carried out in two or more stages, which involve the preliminary production of intermediates (prepolymers) of polyaddition of the isocyanates with a first polyhydroxy compound. Synthesis in reactors is used for producing all polyurethane products that are not foams, including elastomers, paints, adhesives and fibers.

The variability of the characteristics of the polyurethane gives this material a high versatility, both in terms of the properties of the finished product and in terms of the characteristics of workability, as well as for the ease of production and application, and explains why these materials actually represent a large share of the world production of polymeric materials.

Given these premises, it is evident that perfect knowledge and control of the polymerization process are decisive for the final characteristics of the product. In fact, in the industrial production processes of polymers it is of fundamental importance to be able to continuously control the conditions at which the polymerization reaction takes place, in order to obtain a product of high quality and high production yields, and to guarantee the running of the production plant in safe conditions.

Generally, the control of a polymerization process is based on the monitoring of some physical and chemical parameters of the reaction mixture, such as for example the temperature and pressure inside the reactor, and the extent of reaction. The progress of the polymerization of both thermoplastic and thermosetting materials, including polyurethanes, can be followed by various methods and devices, which allow monitoring with good precision some control parameters of the reaction. In particular, viscosity, light diffusion and infrared spectroscopy detectors are used, which measure parameters correlated with the extent of the polymerization reaction. In fact, both the viscosity of the reagent medium and the diffusion of light are quantities directly correlated to the size of the macromolecular chain growing during the reaction (Çatal-Giz H. et al., J. Appl. Polym. Sci. 2001, 82:2070-2077). Infrared spectroscopy, on the other hand,

quantifies the number (and therefore the moles) of the bonds that are formed within the macromolecular chain (Wang S.et al., Macromolecules 2002, 35, 883-888).

By means of monitoring techniques based on near infrared spectroscopy (Near Infra-Red - NIR) it is possible to follow the progress of the polymerization "in-line", i.e. directly on the reaction mixture inside the reactor, in a quick and accurate manner. In-line measuring devices based on NIR spectroscopy generally comprise a measuring probe, connected by optical fibers to a light source, and a spectrophotometer. The probe is housed in the reactor, with the measuring head immersed in the polymerization mixture. The measuring head comprises a cavity, inside which the polymerization mixture undergoing the analysis flows. During the measurement, the probe irradiates the polymerization mixture through a window transparent to IR radiation (sampling window) present in the measuring cavity. The light irradiated by the light source has a wavelength in the near infrared (incident radiation). At the same time, the light source collects the light radiation dispersed by the reaction mixture (originated by the effect of irradiation with the incident radiation) by conveying it to a spectrophotometer. A recent example of a solution polymerization process monitored on-line by means of FT-NIR probes (Fourier transform) and spectroscopic analysis of the incoming and outgoing currents is described in the published international patent application. WO2019/191078 (The Dow Chemical Company) for the polymerization of olefins.

In addition to the spectroscopic investigation methods capable of following the synthesis of polymers in solution over time, the use of fluorescent chemical probes is known from the scientific and patent literature. Once mixed within the polymerization system, such probes are able to monitor the polymerization kinetics, and therefore the extent of reaction, by means of a variation either in the intensity of the emitted light radiation, or in the wavelength. For example, the variation in fluorescence has been experimentally related to the extent of the polymerization reactions of epoxy resins (Hakala K. et al., Macromolecules 2000, 33:5954-5959), of acrylic adhesives (Bosch P. et al., Macromol. Chem. Phys. 2002, 203, 336-345), of polyurethane formulations containing acrylic monomers (Peinado C. et al., Macromol. Chem. Phys. 2001, 202:1924-1934) and polyurethanes based on diisocyanates and polyether and polyester polyols (González-Benito J. et al., J. Appl. Polym. Sci. 2002, 86:2992-3000).

Different fluorescent probes were studied in this field, and the viscosity (or other parameters) variation with the polymerization time was compared with the fluorescence variation of the dissolved probe in the reaction solvent using spectroscopic techniques, and therefore making use of spectrophotometers. As an example of patent literature, US patent 5100802 (The Dow Chemical Company), issued in 1992, discloses one of the first methods of monitoring a polymerization reaction based on the use of fluorescent probes which chemically react with the mixture in the polymerization phase and are definitively incorporated into the polymeric structure. According to the cited patent, the fluorescent probes used are of a type which initially forms complexes with itself or with other components of the system and subsequently chemically reacts with the resin, and whose intensity of fluorescence varies according to the degree of reaction with the resin. The document includes, among the fluorescent probes that meet these requirements, fluorescein and its derivatives, acridine and its derivatives and polycyclic aromatic compounds. Still according to the patent, the quantity of fluorescence emitted by the polymerization system is measured, and this measurement can be carried out by means of an optical fiber probe inserted in the reaction mixture, which can be coupled to appropriate devices for measuring the emissions fluorescence, such as a conventional fluorometer.

All the above examples relating to the use of fluorescent probes make use of cumbersome instrumentation such as spectrophotometers, or at least CCD cameras (charge-coupled devices), i.e. devices that are used to monitor the variation of the fluorescence signal emitted by the probe during the curing time.

Among the organic fluorophores capable of modifying their emission according to the type and intensity of an external stress, some fluorescent probes characterized by a behavior defined as "*aggregation-induced emission*" (AIE) have received a remarkable attention in the last decade. Aggregation-induced emission is an emission of fluorescence, or more generally of luminescence, which is activated only when the viscosity of the system in which the fluorophore is dispersed increases. In practice, while most of the luminophore molecules exhibit good optical properties in solution, which however become much scarcer in the solid state, the molecules that show AIE exhibited an opposite behavior, having a low luminescence in solution, and a much higher luminescence in solid, amorphous or crystalline states, or in more concentrated solutions.

The photophysical phenomenon that leads to the emission induced by aggregation was observed since 1979, when the term "molecular rotors" was coined with reference to some organic luminophores of planar configuration at rest, which are, however, endowed with molecular groups freely rotatable about one of their bonds when the related molecules are in the excited state (Loutfy RO, Pure & Appl. Chem. 1986, Vol. 58:9, 1239-1248; Haidekker, MA et al., Bioorg. Chem., 2005, 33, 415-425). This rotation deactivates the molecule in the excited state following illumination with an ultraviolet-visible light, thus making it poorly fluorescent. When such luminophores, in returning to their relaxed planar state, are in conditions which limit the freedom of these rotations, as it happens, in particular, when their concentration in a solvent increases or when they pass to an aggregate state or crystallize, the molecules are able to deenergize from the excited state, by emitting light by fluorescence or phosphorescence, and therefore their luminescence sharply increases. This family of molecules has also been called "Twisted Intramolecular Charge Transfer" (TICT) complexes.

The same phenomenon was called "aggregation-induced emission" in 2001, in a publication on the behavior of 1-methyl-1,2,3,4,5-pentaphenylsilol (see formula 1 below), a compound having a central ring of sila-cyclopentadiene (also known as silol) bonded to five peripheral phenyl rings. Each phenyl ring is free to rotate around its own bond with the silol (Luo J. et al., Chem. Commun. 2001, 1740).

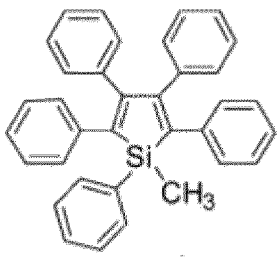

(1)

Since then, numerous classes of molecules have been identified that show this phenomenon, as well as a large number of potential applications of these chromophores in various technical and biological fields (Hong Y. et al., Chem. Soc. Rev. 2011, 40, 5361-5388).

From the structural point of view, the molecules exhibiting an AIE behavior can be construed, generally, as consisting of a central conjugate system, mostly aromatic, having the function of electron-attractor or electron-donor, which is defined "stator", to which molecular groups, called "rotors", are covalently linked. Said "rotors" belong to the category of fluorophores having an emission induced by the aggregation or by the increase in viscosity of the medium. Such rotors can be, for example, chemical derivatives of tetraphenylethylene (2), julolidine (3) or triphenylamine (4).

(2) 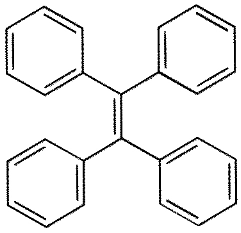

(3) 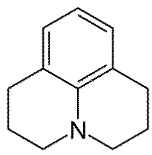

(4) 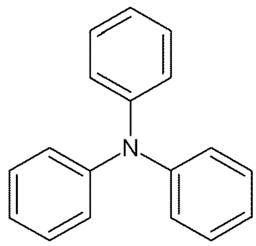

The following figure shows examples of structures that make up a luminescent probe with AIE behavior typically reported in the state of the art.

**AIE rotor------Conjugated stator------AIE rotor**

**Conjugated stator**

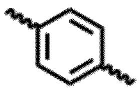
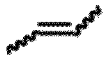
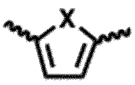
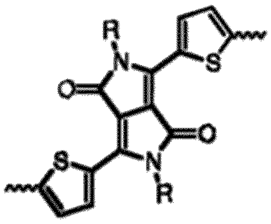
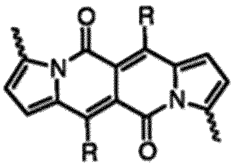
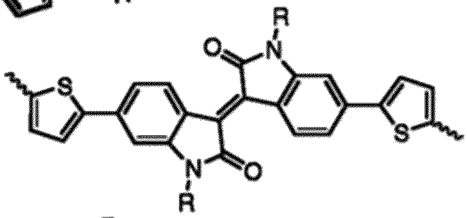
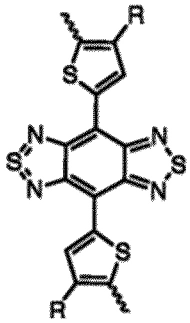
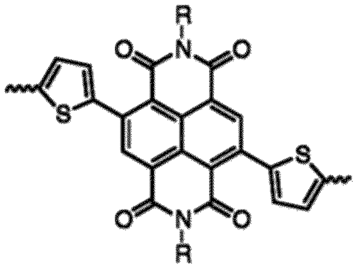

**AIE rotor**

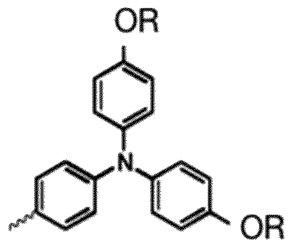
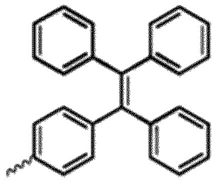
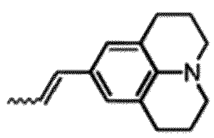

The exemplary structures shown in the previous figure give rise to compounds whose emission in the range of the visible region is highly dependent on the viscosity or state of aggregation of the medium in which the probe is dissolved.

The fact that conjugated aromatic systems containing fluorescent molecular rotors and belonging to the category of fluorophores having emission induced by the aggregation or by the increase in viscosity of the medium are able to abruptly increase their own fluorescence in solution when the viscosity of the medium increases, i.e. precisely during a polymerization process, and can therefore be exploited for monitoring the extent of reaction of RAFT polymerization reactions in solution, has already been evidenced by literature studies (Liu S. et al., Angew. Chem. Int. Ed., 2018, 57, 6274-6278). In that case, which deals with a reversible addition fragmentation chain transfer (RAFT) polymerization, it is the polymerization initiator itself that has the additional characteristics of an AIE probe. Furthermore, the polymerization initiator with AIE characteristics remains covalently bonded to the polymer produced and cannot be eliminated.

In the light of the prior art described, the present invention proposes to make use of the AIE type emissive probes to realize a system for monitoring a polymerization reaction in solution which, while ensuring an accurate and immediate control of the reaction itself, allows to do without expensive and cumbersome instrumentation such as spectrophotometers for reading luminescence data.

## Summary of the invention

In the frame of the studies that led to the present invention, the inventors considered the possibility of exploiting the use of fluorescent probes of the AIE type to develop a control method that does not require the use of complex spectrophotometric equipment. Actually, probes of the AIE type are capable of monitoring the viscosity variation of the reagent medium during the progress of a solution polymerization reaction by showing an evident variation in the intensity of the light emitted.

It has been found, according to the invention, that it is possible to use, in the polymerization, molecular probes with fluorescence induced by the aggregation (AIE type emissive probes), which do not participate in the polymerization

reaction, but are suitably dissolved in the system to be polymerized. The use of such probes is combined with portable or miniaturized detection systems which allow the immediate recognition of a determined wavelength of the incident electromagnetic radiation. In this way, the use of spectrofluorimeters is not necessary: the study of polymerization can be carried out continuously online, simply by using an exciting light source, such as for example a lamp emitting in the near UV or in the visible range, and a photodiode (or a set of photodiodes connected in series, or a photodiode connected to an amplifier). As is known, a photodiode is a semiconductor device which converts light into electric current, i.e. it is a particular type of diode capable of recognizing a certain wavelength of the incident electromagnetic wave and transforming this event into an electric signal, if a suitable electric potential is applied to its ends.

According to the invention, this photodiode can be connected directly to a simple multimeter (tester) for quantifying the variation of the electric potential generated as a result of the light received by the probe. In the alternative, the photodiode may be connected to an electronic board for signal amplification and transfer of the data to a computer for recording. Both solutions allow to read the change in fluorescence emitted by the fluorescent or phosphorescent probe dispersed in the polymerization medium during the reaction.

Obviously, the luminescent probes used in the monitoring method object of the present invention must be chemically inert with respect to the polymerization process, so as not to influence the process parameters and the optoelectronic characteristics of the probe itself.

Photodiodes selected for the proposed method include photodiodes based on silicon, those based on germanium and those based on indium and gallium arsenide, i.e. photodiodes capable of having an active detection window between 190 and 2600 nm wavelength, and preferably those having a detection window between 400 and 800 nm.

According to the method proposed by the invention, therefore, the variation in viscosity over time caused by polymerization, and consequently the extent of the polymerization reaction, are followed in a continuous and accurate way through the variation of the electrical signal coming from the photodiode.

**Detailed description of the invention**

Thus, the present invention specifically provides a solution polymerization process between a first and a second monomer, both in solution in an organic solvent compatible with the reaction system, or in a mixture of compatible solvents, one of the two monomers being added previously, optionally, with other auxiliary components, wherein the extent of the polymerization reaction is monitored, which process is characterized in that it comprises the following operations:

a) adding to one of the two solutions, before mixing, a fluorescent probe of the AIE type (aggregation-induced emission) chemically inert with respect to the polymerization reaction, in an amount corresponding to a concentration between $10^{-6}$ M and $10^{-3}$ M, said fluorescent probe having a quantum yield comprised between 5 and 100%, and an emission of light at a wavelength comprised between 350 and 1600 nm, preferably between 400 and 800 nm;
b) mixing said first and second solutions together in a predetermined stoichiometric ratio to carry out said polymerization reaction;
c) during the reaction, illuminating the reaction environment with an exciting light source of a wavelength in the visible or near ultraviolet range; and
d) simultaneously detecting the radiation emitted by said AIE type fluorescent probe by means of a photodetector consisting of a photodiode, or of a set of photodiodes connected in series, said photodiode or set of photodiodes being connected to means for quantifying the variation of the collected electrical signal, such as a multimeter, or to an electronic board for signal amplification and transfer of the relative data to a computer,

wherein the trend over time of said collected electrical signal gives a measure of the extent of the polymerization reaction,
and wherein said first monomer is a diisocyanate or a polyisocyanate, and said second monomer is a polyol, the resulting polymer being a polyurethane.

As already noted, the photodiodes that can be used in the process according to the invention can be selected from silicon photodiodes, having an active detection window between 190 and 1100 nm, germanium photodiodes, having an active detection window between 400 and 1700 nm, and indium gallium arsenide photodiodes, having an active window between 800 and 2600 nm. The position and width of the active detection window are appropriately chosen, according to the invention, based on the emission wavelength of the fluorescent probe chosen. In particular, it is possible to select photodiodes having an active detection window between 400 and 800 nm, and more particularly between 500 and 700 nm, in particular silicon-based.

In a specific embodiment of the invention, the AIE type fluorescent probe is removed from the polymerization environment at the end of the reaction, by isolating it from the polymer formed.

According to a primary aspect of the invention, the second one of said two monomers is a polyether polyol or a polyester polyol. The stoichiometric ratio at which said two monomers are mixed together is, preferably but not exclusively, 1:1 in moles. The organic solvent compatible with the reaction system in which each of the two monomers is dissolved is preferably selected from dimethyl sulfoxide (DMSO), and dimethylacetamide (DMAc).

The polymerization reaction, in this case, can have as starting reagents, for example, a derivative containing two isocyanate groups, such as 4,4'-methylene-diphenyldiisocyanate (MDI) or toluene diisocyanate (TDI) and a diol, a glycol or a polyethylene glycol (PEG) of different molecular weight. In particular, the PEG can be selected in a range of from 100 to 1000 of average molecular weight (in daltons), and preferably from 400 to 600.

According to this aspect of the invention, step a) preferably consists in adding to the second solution of monomer in an organic solvent a concentration of from $10^{-6}$ to $10^{-3}$ M of an AIE type fluorescent probe having a structure composed of a stator based on a central conjugate system having an electron-attractor or electron-donor function and functionalized with molecular rotor groups based on chemical derivatives of tetra-phenylethylene, julolidine, silacyclopentadienes or, more generally, molecular groups belonging to the category of fluorophores having emission induced by aggregation or increase in viscosity of the medium.

In particular, said fluorescent probe can be the one called TPETPAFN (2,3-bis(4-(phenyl(4-(1,2,2-triphenylvinyl)phenyl)amino)phenyl)fumaronitrile))

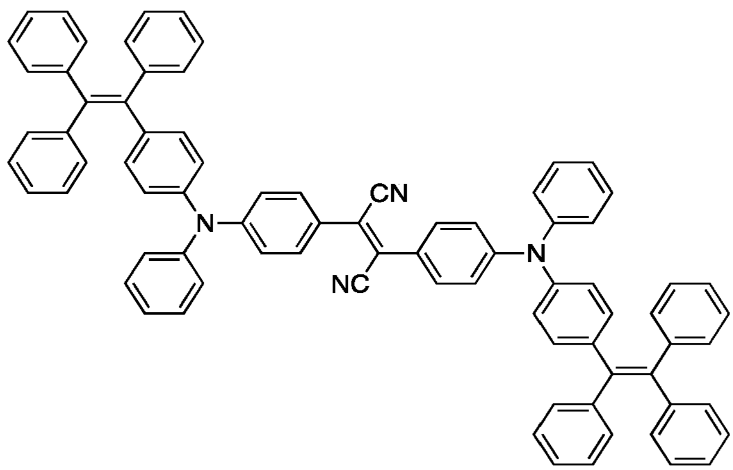

The latter has a structure composed of a portion having an electron-withdrawing function (fumaronitrile) and an electron-donor (triphenylamine). TPETPAFN has a wide electronic conjugation, high quantum yield of solid-state fluorescence (52.5%) and intense red-orange light emission, peaking at 625 nm.

According to another specific embodiment of the invention, said fluorescent probe with AIE behavior can be the fluorescent probe called dicyanovinyl-julolidine, DCVJ, having the following structural formula:

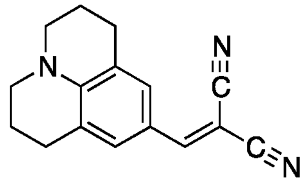

As is known, this fluorescent probe has a quantum yield of solid state fluorescence of about 20%, and a green light emission, with a peak at 510 nm.

According to a further embodiment of the method of the invention, the fluorescent probe with AIE behavior selected can be the tetraphenylethylene derivative known as TPE-Py (tetrafenylene-pyridinium).

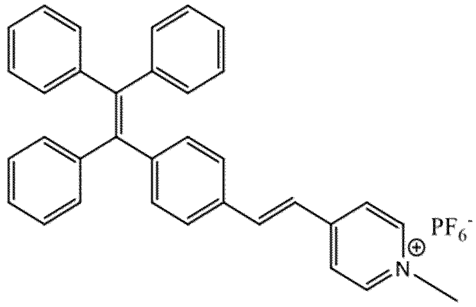

In this case, the probe has a quantum yield of solid-state fluorescence of approximately 45%, and a yellow-red light emission peaking at 600 nm.

According to some specific embodiments of the proposed process, the light source used to irradiate the reaction environment according to the above operation c) can consist, in particular, in one or more lamps with excitation wavelengths in the range from 290 to 550 nm, and preferably in the range from 360 to 450 nm.

As regards the photodetector referred to in step d), one or more photodetectors connected in series may be used, or photodetector(s) with variable shape and/or surface, adaptable to the vessel or reaction system, in order to collect the maximum amount of radiation emitted from the probe.

Still according to preferred embodiments of the invention, the aforementioned means for recording the variation of the electrical potential collected by the photodetector can consist of a simple multimeter. In another preferred variant, said means for recording the variation of the electrical signal collected by said photodetector may consist of an electronic card for the amplification of said electrical signal the transfer thereof to a computer.

**Brief description of the figures**

The specific features of the invention, as well as its advantages, will be more evident with reference to the attached figures, in which:

**Figure 1** shows a schematic illustration of an experimental prototype, which represents the concept of the monitored solution polymerization process according to the present invention;

**Figure 2** is an experimental diagram showing the change in viscosity at room temperature detected by a rotational viscosimeter (circles), the change in fluorescence detected by a spectrofluorometer (solid line) and the change in electric potential detected by means of a silicon photodiode with a sensitivity range between 400 and 1100 nm connected to a multimeter, i.e. according to the method of the present invention, in the case of polymerization of MDI with PEG 400 and TPETPAFN as a probe;

**Figure 3** is an experimental diagram showing the variation of the same three quantities of Figure 2 in the case of polymerization of MDI with PEG 600 and TPETPAFN as probe;

**Figure 4** is an experimental diagram showing the variation of the same three quantities of Figure 2 in the case of polymerization of MDI with PEG 400, and DCVJ as a probe;

**Figures 5** and **6** show the FTIR spectra of polyurethane samples obtained with the process of the present invention, starting respectively from MDI and PEG 400 and from MDI and PEG 600, in comparison with the spectra of samples obtained from systems under the same conditions but without the use of fluorescent probes; is

**Figures 7** and **8** show the 1H NMR spectra of the polyurethane samples obtained with the process of the present invention, starting from MDI and PEG 400 and from MDI and PEG 600 respectively, in comparison with the spectra of samples obtained from systems under the same conditions but without the use of fluorescent probes.

**Laboratory tests performed on the invention**

The experiment was conducted by carrying out the polymerization of polyurethane in solution in dimethylacetamide (DMAc), with the two reagents 4,4'-methylene-diphenyldiisocyanate (MDI) and polyethylene glycol (PEG) as diol, as indicated in the following scheme:

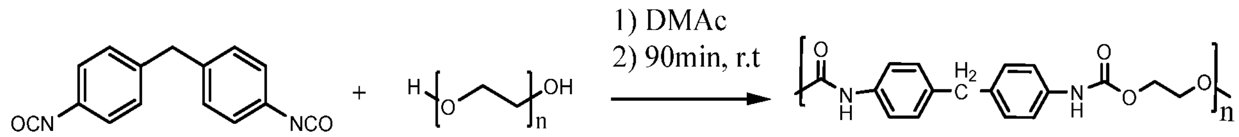


**MDI** **PEG** **PU**

In different tests, two different molecular weights of PEG, 400 and 600, were tested, in both cases in a 1:1 mole ratio in with the diisocyanate. The polymerization was carried out in the presence of the fluorescent probe with AIE behavior called TPETPAFN, at a concentration of $5 \cdot 10^{-4}$ M. As already noted, TPETPAFN has a high quantum yield of fluorescence in the solid state (52.5%) and intense red-orange emission, at 625 nm.

The attached **Figure 1** shows a schematic representation of an experimental apparatus corresponding to the solution polymerization process monitored according to the present invention, represented starting from step b) of mixing the two monomer solutions including the fluorescent probe. In the figure, the reaction vessel (1), equipped with stirrer (2) is illuminated, during the polymerization reaction, by the lamp (3), in the case of the reported experiment a LED light source emitting in the violet range (405 nm, Edmund Optics). The radiation emitted during the polymerization reaction by the fluorescent probe dissolved in the system is collected by the photodiode (4), in this specific case a Silonex SLSD-71N6 planar silicon photodiode. The photodiode has a sensitivity range between 400 and 1100 nm with an area of 109.1 $mm^2$, and transforms the emitted fluorescence into electric current, and transmits it to the multimeter (5) for quantification.

To monitor the degree of progress of the polymerization reaction for comparison purposes, the viscosity of the system was measured for the entire duration of the reaction. The polymerization reaction indicated in the diagram above follows a second order kinetics, and for this reason the trend obtained can be interpolated with an exponential decay:

$$y = y_0 + A_1 \cdot exp\,(- x/t_1) \qquad \text{(equation 1)}$$

In particular, as shown in **Figure 2**, the fluorescence intensity of the TPETPAFN luminescent probe was also monitored at its maximum emission peak (625 nm) as a function of the polymerization time by means of an optical fiber connected to a spectrofluorometer. The results show a trend increasing over time until a plateau is reached, i.e. until the viscosity value is reached which completely blocks the molecular motions of the AIE probe, maximizing its fluorescence. This phenomenon is in fact more marked by using a PEG with a higher molecular weight (600 instead of 400), as shown in **Figure 3.**

These investigations became necessary in order to confirm the state of the art data starting from the probes used in the context of the present invention. The same process was then repeated by collecting the change in luminescence using the photodiode (4) and recording the change in potential using the multimeter (5) or an electronic board connected to a computer. These results are also shown in **Figures 3** and **4.**

Noteworthy is the potential variation recorded by the photodiode (especially in the case of the PEG 600), which has a trend similar to that of the fluorescence. In particular, this analogy of behavior is confirmed by the comparison of the parameters obtained from the interpolation of the curves with equation 1. The parameter $t_1$ of all three curves is of the same order of magnitude, i.e. about $10^3$ $s^{-1,}$ and, therefore, there is a direct correlation between the fluorescence, measured both with the spectrofluorimeter and with the photodiode, as a function of the polymerization of the polyurethane.

At the end of the reaction, the polyurethane was recovered by precipitation in water and analyzed according to common characterization techniques (FTIR spectrophotometry, proton nuclear magnetic resonance and size exclusion chromatography), confirming in all cases the successful synthesis of the polyurethane.

Weight average molecular weights of about 15,000 g/mol were recorded, with a polydispersity index of about 3.5.

As shown in **Figure 4**, the experimental results were also confirmed using another fluorescent probe always having AIE characteristics and with a fluorescence emission at about 510 nm, dicyanovinyl-julolidine (DCVJ).

**Polymerization and viscosity measurements**

As in the previous cases, the polymerization was carried out in a solution of dimethylacetamide (DMAc) with 4,4'-methylene-diphenyldiisocyanate (MDI) and polyethylene glycol (PEG) of different molecular weight, in a ratio of 1:1 in moles.

As an example, 15 g of MDI (0.06 mol) were weighed, 15 mL of DMAc under argon were added to maintain the anhydrous atmosphere, then dissolved under the vacuum of the mechanical pump with magnetic stirring. PEG 400

(24 g, 0.06 mol) was then weighed in a 10 mL beaker, dissolved in 15 mL of DMAc and maintained under magnetic stirring under a nitrogen hood.

The MDI was then added to the PEG, the viscometer rotor was inserted and the viscosity of the solution was recorded at regular intervals for 90 min. The polymerization was carried out at room temperature.

The product obtained was then purified by precipitation in 3 L of water under strong stirring. The precipitate was then filtered on the buchner filter under the vacuum of a membrane pump, washed with water and then transferred to a Petri dish and dried in a crystallizer under the vacuum of the mechanical pump to eliminate residual water.

Two further polymerization tests were carried out in the presence of the fluorescent viscosity probes, in particular by adding 1 mg of DCVJ (4.5 . $10^{-6}$ mol) and 4.8 mg of TPET-PAFN ( 4.5 · $10^{-6}$ mol), respectively.

The same procedure was reproduced with -the PEG 600. The product obtained was then analyzed.

**Polymerization and fluorescence measurements**

For the fluorescence measurements, the excitation wavelength was set equal to the maximum of the absorption spectrum of each dye (430 nm for DCVJ and 500 nm for TPETPAFN, respectively) and the emission wavelength equal to maximum of its emission spectrum (510 nm for DCVJ and 625 nm for TPETPAFN, respectively). The slits were set at 2 nm.

2 g of MDI (8 · $10^{-3}$ mol) were mixed with 2 mL of DMAc in an inert argon atmosphere and dissolved by magnetic stirring under the vacuum of the mechanical pump.

<u>Use of DCVJ as a fluorescent probe</u>: 3.19 g of PEG 400 (8· $10^{-3}$ mol) were weighed separately and mixed with 0.6 mL of stock solution $10^{-3}$ M of DCVJ in DMAc. They were placed under the vacuum of the mechanical pump and under magnetic stirring at 45 °C for 2 hours to eliminate the solvent contained in the stock solution. 2 mL of DMAc and the MDI solution were then added to the PEG containing the dye. Everything was placed under a dark room connected to the optical fiber of the instrument. Fluorescence values were taken for 120 min at 1 second intervals.

<u>Use of TPETPAFN as a fluorescent probe</u>: the experiment was repeated using 1.2 mL of a 5 · $10^{-4}$ M stock solution of TPETPAFN in DMAc. Half of the solvent (1 mL) was used to make the AIE effect more visible.

The experiments were repeated in an identical manner using the PEG 600.

**Polymerization and use of the photodiode**

The sample was prepared with the same procedure used for the fluorescence measurements and the potential difference values were taken at regular intervals for 90 min.

The photodiode was fixed inside the black box in contact with the container in which the polymerization reaction was carried out, in a perpendicular position with respect to the direction of the light beam. The sample was illuminated with an optical fiber connected to the fluorimeter, with $\lambda_{em}$ = 500 nm, corresponding to the maximum of the absorption spectrum of TPETPAFN. The slits were set at 10 nm to have a greater intensity of the light source.

The photodiode was connected to the multimeter to obtain the potential difference measurements as a function of time.

The measurement was repeated with both the PEG 400 and the PEG 600.

**Characterization**

*<u>Fourier Transform Infrared Spectroscopy (FTIR)</u>*

FTIR analyses of the samples obtained following the polymerization were carried out on the solid products.

From the analysis of the spectra in Figure 5 it can be observed that the characteristic signal of the isocyanate positioned at about 2270 cm-1 is not present, which confirms the reaction between the MDI and the diol. At 1724 $cm^{-1}$ there is a band with an evident shoulder at 1709 cm-1 which correspond to the stretching of the carbonyl of the urethane group formed as a result of the polymerization process. Between 3200 and 3460 $cm^{-1}$ we observe the stretching of the N-H of the urethane, and the coupling between the stretching of the C-N and the bending of the N-H at 1535 $cm^{-1}$, also associated with the signal at 1220 $cm^{-1}$. These signals confirm the formation of the urethane bond. At 2872 $cm^{-1}$ it is possible to identify the signal of the symmetrical and asymmetrical stretching of the aliphatic CH, at 1599 $cm^{-1}$ the stretching of the aromatic C=C, at 1095 cm-1 and 1068 $cm^{-1}$ the signals of group C-OR of the ether and ester, respectively. The 1650 $cm^{-1}$ peak corresponds to the stretching of the urea carbonyl which forms hydrogen bonds and the 3 characteristic signals of the isocyanurate appear, the isocyanate trimer, at 767, 1413 and 1703 $cm^{-1}$, the latter is superimposed to the stretching band of the C=O of the urethane and therefore hidden.

Practically superimposable spectra were recorded for all the prepared polymers, thus suggesting that the presence of the fluorescent probe does not determine significant variations of the functional groups present in the

structure of the prepared polymers. Furthermore, as shown in **Figure 6**, similar spectra were recorded starting from the polymerized products using a diol with Mw = 600.

In particular, in all the cases analyzed, it was not possible to identify the signals attributable to the probes used during the polymerization due to the concentration below the sensitivity threshold of the spectroscopic investigation technique.

*$^1$H NMR proton magnetic resonance spectroscopy*

$^1$H NMR analyses of the samples obtained following the polymerization were carried out starting from the swollen product in deuterated chloroform.

From the $^1$H NMR spectra shown in **Figure 7** for the samples obtained starting from the diol with Mw = 400 it is possible to identify at 7.77 ppm the signal attributable to the resonance of the hydrogen bound to the nitrogen of the urethane, while between 7.07 and 7.42 ppm the characteristic signals of the aromatic ring are present. At 3.86 ppm it is possible to identify the signal corresponding to the hydrogen of the methyl group between the aromatic rings and between 3.63 and 3.71 ppm those corresponding to the hydrogen of the aliphatic chain. Practically superimposable spectra were recorded for all the prepared polymers, thus suggesting that the presence of the fluorescent probe does not cause significant changes in the structure of the prepared polymers. Furthermore, similar spectra were recorded starting from the polymerized products using a diol with Mw = 600 **(Figure 8**). In particular, in all the cases analyzed, it was not possible to identify the signals attributable to the probes used during the polymerization due to the concentration lower than the sensitivity threshold of the spectroscopic investigation technique.

In conclusion, the present invention provides to replace, for the monitoring of a polymerization reaction in solution, the use of a photodiode which allows to read the fluorescence variation emitted during the polymerization through a classic multimeter or an electronic board to be connected to a computer. In this way, the polymerization progress monitoring procedure frees itself from the use of complex spectrofluorometers to the advantage of a simple, reproducible and low-cost method.

The present invention has been described with reference to some of its specific embodiments, but it should be understood that variations or modifications may be made to it by those skilled in the art without thereby departing from the scope of protection specified in the attached claims.

**Claims**

1. A solution polymerization process between a first monomer and a second monomer, both in solution in an organic solvent compatible with the reaction system, or in a mixture of compatible solvents, one of the two monomers being previously added, optionally, with other auxiliary components, wherein the extent of the polymerization reaction is monitored, which process is **characterized in that** it comprises the following operations:

   a) adding to one of the two solutions, before mixing, a fluorescent probe of the AIE type (aggregation-induced emission) chemically inert with respect to the polymerization reaction, in an amount corresponding to a concentration between $10^{-6}$ M and $10^{-3}$ M, said fluorescent probe having a quantum yield comprised between 5 and 100%, and an emission of light at a wavelength comprised between 350 and 1600 nm, preferably between 400 and 800 nm;
   b) mixing said first and second solution with each other in a pre-set stoichiometric ratio to carry out said polymerization reaction;
   c) during the reaction, illuminating the reaction environment with an exciting light source of a wavelength in the visible or in the near ultraviolet range; and
   d) simultaneously detecting the radiation emitted by said AIE type fluorescent probe by means of a photodetector consisting of a photodiode, or a set of photodiodes connected in series, said photodiode or set of photodiodes being connected to means for recording the variation of the electric potential collected, such as a multimeter, or an electronic board for signal amplification and transfer of the relative data to a computer, wherein the trend over time of said collected electrical signal gives a measure of the extent of the polymerization reaction,

   and wherein said first monomer is a diisocyanate or a polyisocyanate, and said second monomer is a polyol, the resulting polymer being a polyurethane.

2. The polymerization process according to claim 1, wherein said photodiode or photodiode set has an active detection window in the range between 190 nm and 2600 nm wavelength, and is a silicon, or germanium, or indium gallium arsenide photodiode, or set of photodiodes.

3. The polymerization process according to claim 2, wherein said active detection window is in the range between 400 nm and 800 nm, preferably between 500 nm and 700 nm, and said photodiode or photodiode set is a silicon photodiode.

4. A polymerization process according to any one of the preceding claims, wherein said AIE type fluorescent probe is removed from the reaction environment at the end of the polymerization, by isolating it from the polymer formed.

5. A polymerization process according to any one of the preceding claims, wherein said second monomer is a polyether polyol or a polyester polyol.

6. The polymerization process according to claim 5, wherein said first monomer is 4,4'-methylene diisocyanate (MDI), 2,4-toluene diisocanate or 2,6-toluene diisocanate (TDI), said second monomer is polyethylene glycol (PEG), preferably with a molecular weight between 100 and 1000, more preferably from 400 to 600, and the molar ratio between said first monomer and said second monomer in the mixing operation b) is 1:1.

7. A polymerization process according to any one of the preceding claims, wherein said AIE type fluorescent probe of operation a) is selected from TPETPAFN (2,3-bis (4-(phenyl(4-(1,2,2-triphenylvinyl)phenyl)amino)phenyl)fumaronitrile), DCVJ (dicyanovinyl julolidine) and TPE-Py (tetraphenilene pyridinium).

8. The polymerization process according to claim 6, wherein the concentration of said AIE type fluorescent probe of operation a) is between $10^{-4}$ and $10^{-3}$ M.

9. A polymerization process according to any one of the preceding claims, wherein said light source of operation c) consists of one or more lamps having excitation wavelengths in the range from 290 nm to 550 nm.

10. A polymerization process according to claim 9, wherein said excitation wavelengths are in the range from 360 nm to 450 nm.

11. A polymerization process according to any one of the preceding claims, wherein said means for recording the variation of the electric potential collected by said photodetector consist in a multimeter.

12. A polymerization process according to any one of claims 1-11, wherein said means for recording the variation of the electric signal collected by said photodetector consist in an electronic card for the amplification of said electric signal and its transfer to a computer.

**Patentansprüche**

1. Verfahren zur Lösungspolymerisation zwischen einem ersten Monomer und einem zweiten Monomer, beide in Lösung in einem mit dem Reaktionssystem kompatiblen organischen Lösungsmittel oder in einem Gemisch kompatibler Lösungsmittel, wobei eines der beiden Monomere zuvor, gegebenenfalls mit anderen Hilfskomponenten, zugegeben wird, wobei das Ausmaß der Polymerisationsreaktion überwacht wird, wobei das Verfahren **dadurch gekennzeichnet ist, dass** es die folgenden Schritte umfasst:

a) Zugabe einer Fluoreszenzsonde vom Typ AIE (aggregationsinduzierte Emission), die gegenüber der Polymerisationsreaktion chemisch inert ist, zu einer der beiden Lösungen vor dem Mischen in einer Menge, die einer Konzentration zwischen $10^{-6}$ M und $10^{-3}$ M entspricht, wobei die Fluoreszenzsonde eine Quantenausbeute zwischen 5 und 100% und eine Lichtemission bei einer Wellenlänge zwischen 350 und 1600 nm, vorzugsweise zwischen 400 und 800 nm, aufweist;
b) mischen der ersten und der zweiten Lösung miteinander in einem vorgegebenen stöchiometrischen Verhältnis, um die Polymerisationsreaktion auszuführen;
c) beleuchten der Reaktionsumgebung während der Reaktion mit einer Anregungslichtquelle mit einer Wellenlänge im sichtbaren oder im nahen ultravioletten Bereich; und
d) gleichzeitiges Erfassen der von der Fluoreszenzsonde des AIE-Typs emittierten Strahlung mittels eines Photodetektors, der aus einer Photodiode oder einem Satz von in Reihe geschalteten Photodioden besteht, wobei die Photodiode oder der Satz von Photodioden mit einer Einrichtung zum Aufzeichnen der Veränderung des erfassten elektrischen Potentials, wie z.B. einem Multimeter, oder einer elektronischen Karte zur Signalverstärkung und Übertragung der relativen Daten an einen Computer verbunden ist,

wobei der zeitliche Verlauf des gesammelten elektrischen Signals ein Maß für das Ausmaß der Polymerisationsreaktion darstellt,
und wobei das erste Monomer ein Diisocyanat oder ein Polyisocyanat ist, und das zweite Monomer ein Polyol ist, wobei das resultierende Polymer ein Polyurethan ist.

**2.** Polymerisationsverfahren nach Anspruch 1, wobei die Photodiode oder der Photodiodensatz ein aktives Detektionsfenster im Bereich zwischen 190 nm und 2600 nm Wellenlänge aufweist und eine Silizium- oder Germanium- oder Indium-Gallium-Arsenid-Photodiode oder ein Satz von Photodioden ist.

**3.** Polymerisationsverfahren nach Anspruch 2, wobei das aktive Detektionsfenster im Bereich zwischen 400 nm und 800 nm, vorzugsweise zwischen 500 nm und 700 nm, liegt und die Photodiode oder der Photodiodensatz eine Silizium-Photodiode ist.

**4.** Polymerisationsverfahren nach einem der vorhergehenden Ansprüche, wobei die Fluoreszenzsonde vom Typ AIE am Ende der Polymerisation aus der Reaktionsumgebung entfernt wird, indem sie von dem gebildeten Polymer isoliert wird.

**5.** Polymerisationsverfahren nach einem der vorangehenden Ansprüche, wobei das zweite Monomer ein Polyetherpolyol oder ein Polyesterpolyol ist.

**6.** Polymerisationsverfahren nach Anspruch 5, wobei das erste Monomer 4,4'-Methylendiisocyanat (MDI), 2,4-Toluoldiisocanat oder 2,6-Toluoldiisocanat (TDI) ist, das zweite Monomer Polyethylenglykol (PEG) ist, vorzugsweise mit einem Molekulargewicht zwischen 100 und 1000, besonders bevorzugt zwischen 400 und 600, und das Molverhältnis zwischen dem ersten Monomer und dem zweiten Monomer im Mischvorgang b) 1:1 beträgt.

**7.** Polymerisationsverfahren nach einem der vorhergehenden Ansprüche, wobei die fluoreszierende Sonde vom AIE-Typ des Vorgangs a) ausgewählt ist aus TPETPAFN (2,3-bis-(4-(phenyl(4-(1,2,2-triphenylvinyl)phenyl)amino)phenyl)fu-maronitril), DCVJ (Dicyanovinyljulolidin) und TPE-Py (Tetraphenilenpyridinium).

**8.** Polymerisationsverfahren nach Anspruch 6, wobei die Konzentration der Fluoreszenzsonde vom AIE-Typ des Verfahrens a) zwischen $10^{-4}$ und $10^{-3}$ M liegt.

**9.** Polymerisationsverfahren nach einem der vorhergehenden Ansprüche, wobei die Lichtquelle der Operation c) aus einer oder mehreren Lampen mit Anregungswellenlängen im Bereich von 290 nm bis 550 nm besteht.

**10.** Polymerisationsverfahren nach Anspruch 9, wobei die Anregungswellenlängen im Bereich von 360 nm bis 450 nm liegen.

**11.** Polymerisationsverfahren nach einem der vorhergehenden Ansprüche, wobei die Mittel zur Aufzeichnung der Veränderung des elektrischen Potentials, das von dem Photodetektor erfasst wird, aus einem Multimeter bestehen.

**12.** Polymerisationsverfahren nach einem der Ansprüche 1-11, **dadurch gekennzeichnet, dass** die Mittel zur Aufzeichnung der Veränderung des von dem Photodetektor erfassten elektrischen Signals in einer elektronischen Karte zur Verstärkung des elektrischen Signals und dessen Übertragung an einen Computer bestehen.

## Revendications

**1.** Procédé de polymérisation en solution entre un premier monomère et un second monomère, tous deux en solution dans un solvant organique compatible avec le système réactionnel, ou dans un mélange de solvants compatibles, l'un des deux monomères étant préalablement ajouté, éventuellement, à d'autres composants auxiliaires, dans lequel l'ampleur de la réaction de polymérisation est contrôlée, ce procédé étant **caractérisé en ce qu'**il comprend les opérations suivantes :

a) ajouter à l'une des deux solutions, avant mélange, une sonde fluorescente de type AIE (émission induite par agrégation) chimiquement inerte vis-à-vis de la réaction de polymérisation, en quantité correspondant à une concentration comprise entre $10^{-6}$ M et $10^{-3}$ M, ladite sonde fluorescente ayant un rendement quantique compris entre 5 et 100%, et une émission de lumière à une longueur d'onde comprise entre 350 et 1600 nm, de préférence

entre 400 et 800 nm;

b) mélanger lesdites première et seconde solutions l'une avec l'autre dans un rapport stœchiométrique prédéfini pour réaliser ladite réaction de polymérisation;

c) pendant la réaction, éclairer l'environnement de réaction avec une source de lumière excitatrice d'une longueur d'onde dans le visible ou dans le proche ultraviolet; et

d) détecter simultanément le rayonnement émis par ladite sonde fluorescente de type AIE au moyen d'un photodétecteur constitué d'une photodiode, ou d'un ensemble de photodiodes connectées en série, ladite photodiode ou cet ensemble de photodiodes étant relié à des moyens d'enregistrement de la variation du potentiel électrique collecté, tel qu'un multimètre, ou une carte électronique pour l'amplification du signal et le transfert des données relatives à un ordinateur,

dans lequel la tendance dans le temps dudit signal électrique collecté donne une mesure de l'étendue de la réaction de polymérisation,

et dans lequel ledit premier monomère est un diisocyanate ou un polyisocyanate, et ledit deuxième monomère est un polyol, le polymère résultant étant un polyuréthane.

2. Procédé de polymérisation selon la revendication 1, dans lequel ladite photodiode ou ensemble de photodiodes présente une fenêtre de détection active dans la plage comprise entre 190 nm et 2600 nm de longueur d'onde, et est une photodiode en silicium, ou germanium, ou arséniure d'indium et de gallium, ou un ensemble de photodiodes.

3. Procédé de polymérisation selon la revendication 2, dans lequel ladite fenêtre de détection active est comprise entre 400 nm et 800 nm, de préférence entre 500 nm et 700 nm, et ladite photodiode ou ensemble de photodiodes est une photodiode au silicium.

4. Procédé de polymérisation selon l'une quelconque des revendications précédentes, dans lequel ladite sonde fluorescente de type AIE est retirée du milieu réactionnel en fin de polymérisation, en l'isolant du polymère formé.

5. Procédé de polymérisation selon l'une quelconque des revendications précédentes, dans lequel ledit deuxième monomère est un polyéther polyol ou un polyester polyol.

6. Procédé de polymérisation selon la revendication 5, dans lequel ledit premier monomère est le 4,4'-diisocyanate de méthylène (MDI), le 2,4-toluène diisocanate ou le 2,6-toluène diisocyanate (TDI), ledit deuxième monomère est le polyéthylène glycol (PEG), de préférence avec un poids moléculaire compris entre 100 et 1000, plus préférablement entre 400 et 600, et le rapport molaire entre ledit premier monomère et ledit deuxième monomère dans l'opération de mélange b) est de 1:1.

7. Procédé de polymérisation selon l'une quelconque des revendications précédentes, dans lequel ladite sonde fluorescente de type AIE de l'opération a) est choisie parmi le TPETPAFN (2,3-bis (4-(phényl(4-(1,2,2-triphénylvinyl)phényl)amino)phényl)fumaronitrile), DCVJ (dicyanovinyl julolidine) et TPE-Py (tétraphénilène pyridinium) .

8. Procédé de polymérisation selon la revendication 6, dans lequel la concentration de ladite sonde fluorescente de type AIE de l'opération a) est comprise entre $10^{-4}$ et $10^{-3}$ M.

9. Procédé de polymérisation selon l'une quelconque des revendications précédentes, dans lequel ladite source lumineuse de l'opération c) est constituée d'une ou plusieurs lampes ayant des longueurs d'onde d'excitation comprises dans la plage de 290 nm à 550 nm.

10. Procédé de polymérisation selon la revendication 9, dans lequel lesdites longueurs d'onde d'excitation sont comprises dans la plage de 360 nm à 450 nm.

11. Procédé de polymérisation selon l'une quelconque des revendications précédentes, dans lequel lesdits moyens d'enregistrement de la variation du potentiel électrique collecté par ledit photodétecteur consistent en un multimètre.

12. Procédé de polymérisation selon l'une quelconque des revendications 1-11, dans lequel lesdits moyens d'enregistrement de la variation du signal électrique collecté par ledit photodétecteur consistent en une carte électronique pour l'amplification dudit signal électrique et son transfert vers un ordinateur.

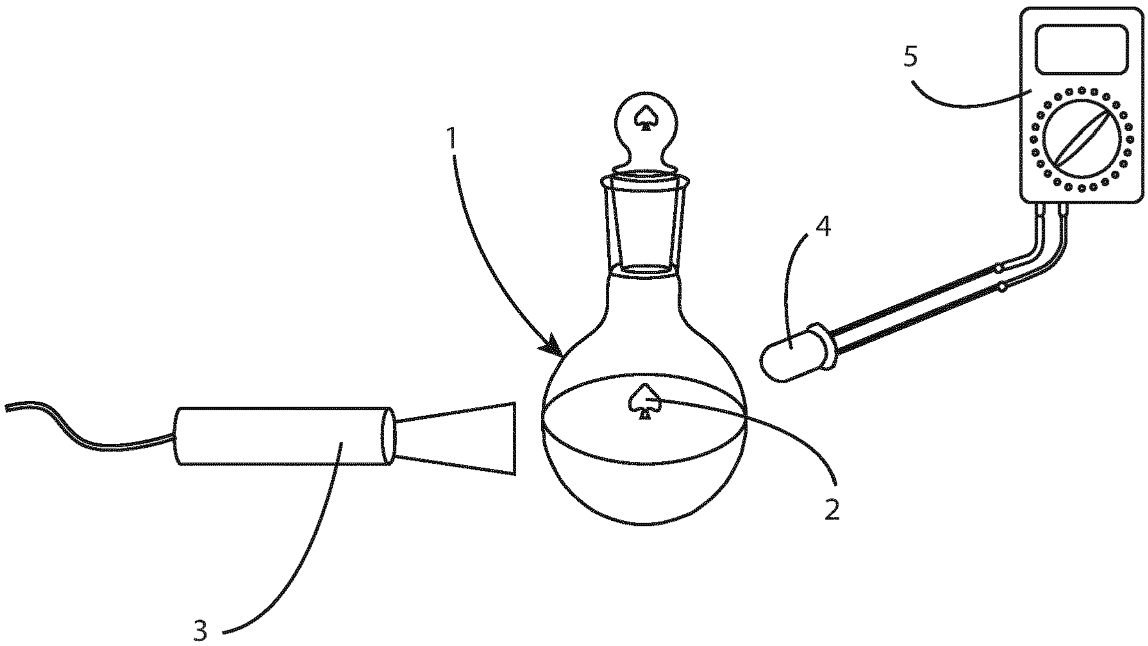


Fig.1

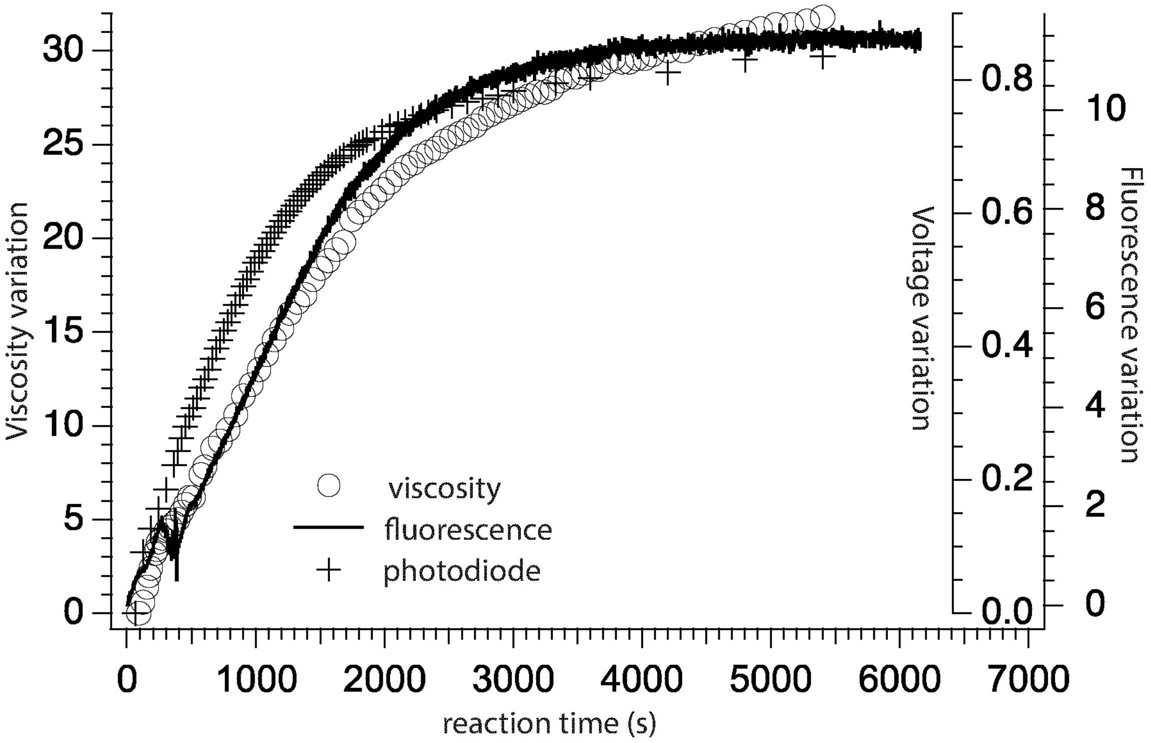

Viscosity variation
Voltage variation
Fluorescence variation
reaction time (s)
viscosity
fluorescence
photodiode


Fig.2

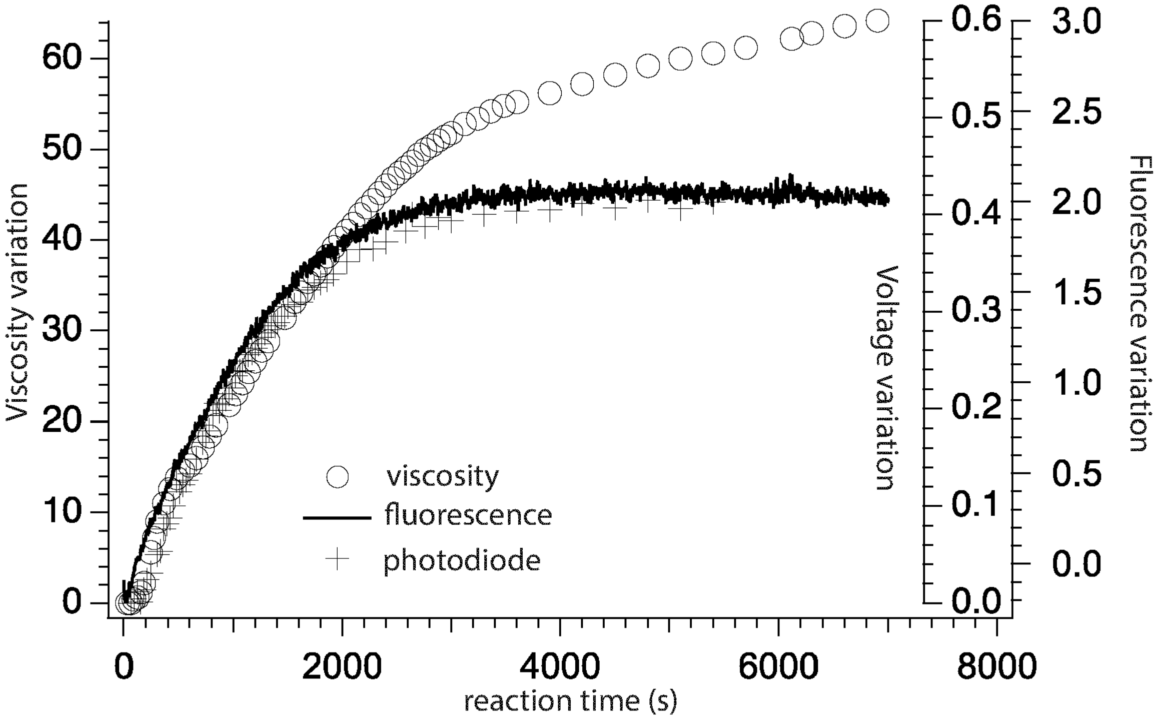

Viscosity variation
Voltage variation
Fluorescence variation
reaction time (s)
viscosity
fluorescence
photodiode


Fig.3

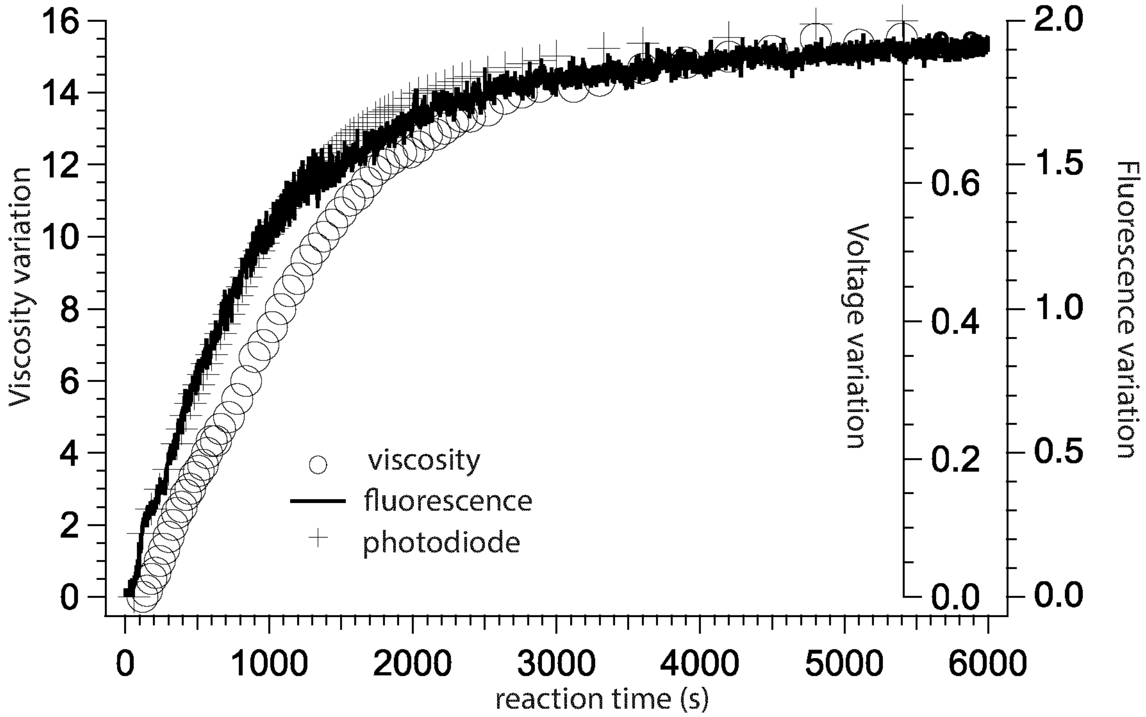
16
14
12
10
8
6
4
2
0
Viscosity variation
2.0
1.5
1.0
0.5
0.0
Fluorescence variation
0.6
0.4
0.2
0.0
Voltage variation
viscosity
fluorescence
photodiode
0
1000
2000
3000
4000
5000
6000
reaction time (s)

Fig.4

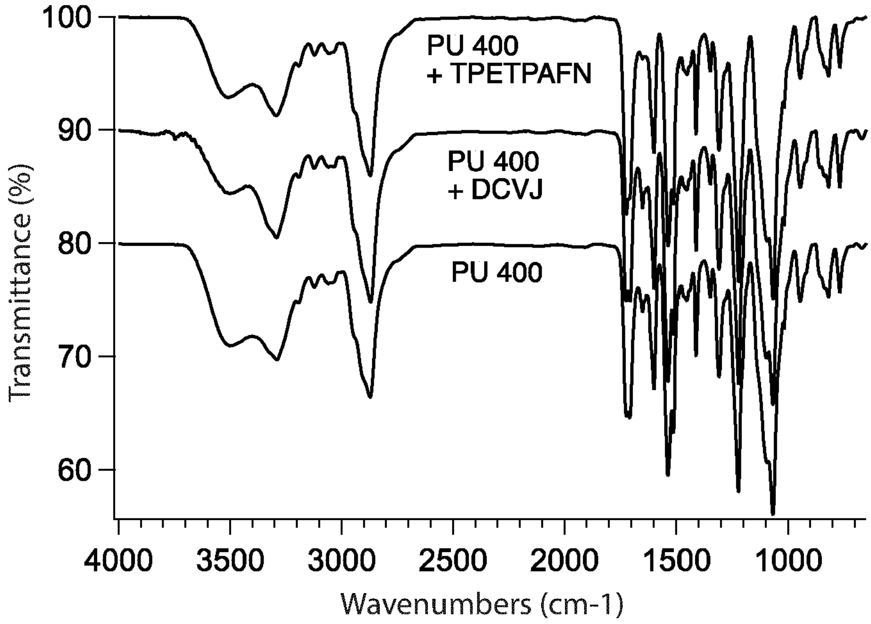
PU 400
+ TPETPAFN
PU 400
+ DCVJ
PU 400
Transmittance (%)
Wavenumbers (cm-1)
100
90
80
70
60
4000
3500
3000
2500
2000
1500
1000

Fig.5

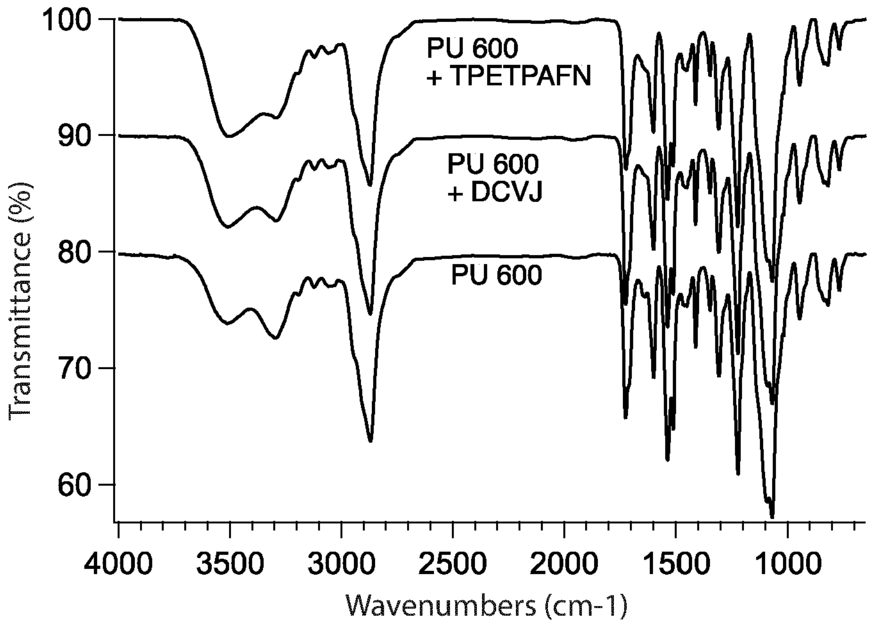
PU 600
+ TPETPAFN
PU 600
+ DCVJ
PU 600
Transmittance (%)
Wavenumbers (cm-1)
100
90
80
70
60
4000
3500
3000
2500
2000
1500
1000

Fig.6

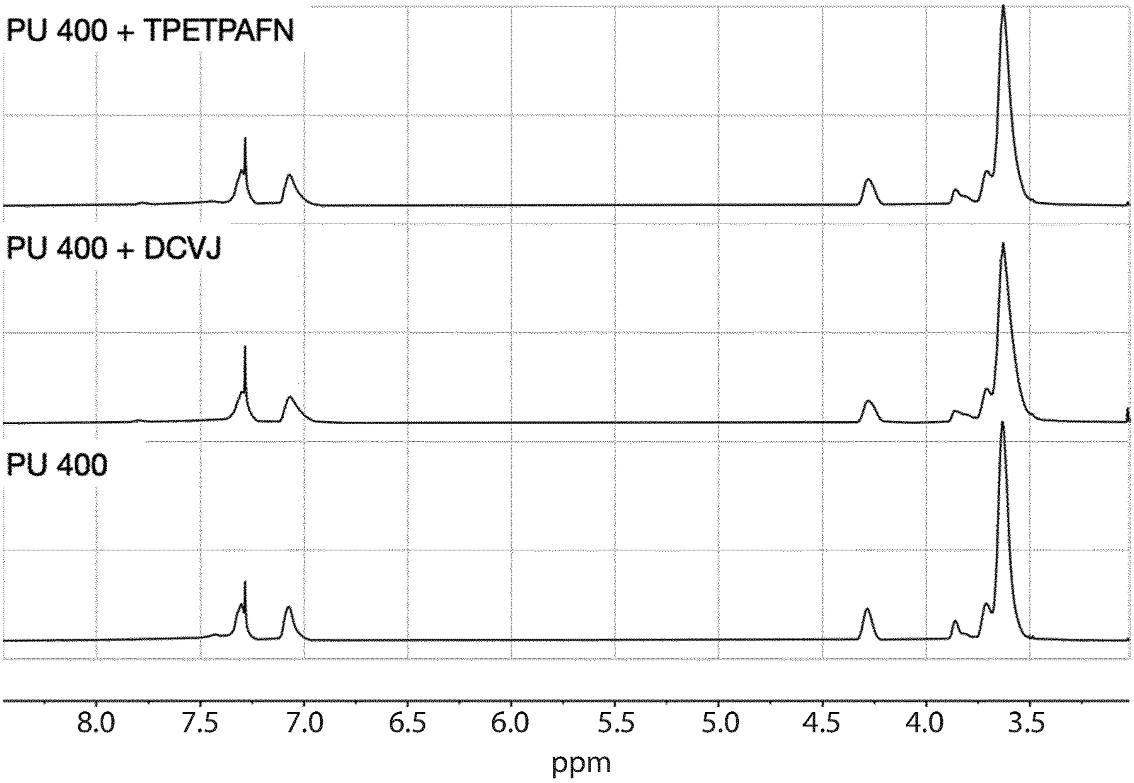
PU 400 + TPETPAFN
PU 400 + DCVJ
PU 400
8.0 7.5 7.0 6.5 6.0 5.5 5.0 4.5 4.0 3.5
ppm

Fig.7

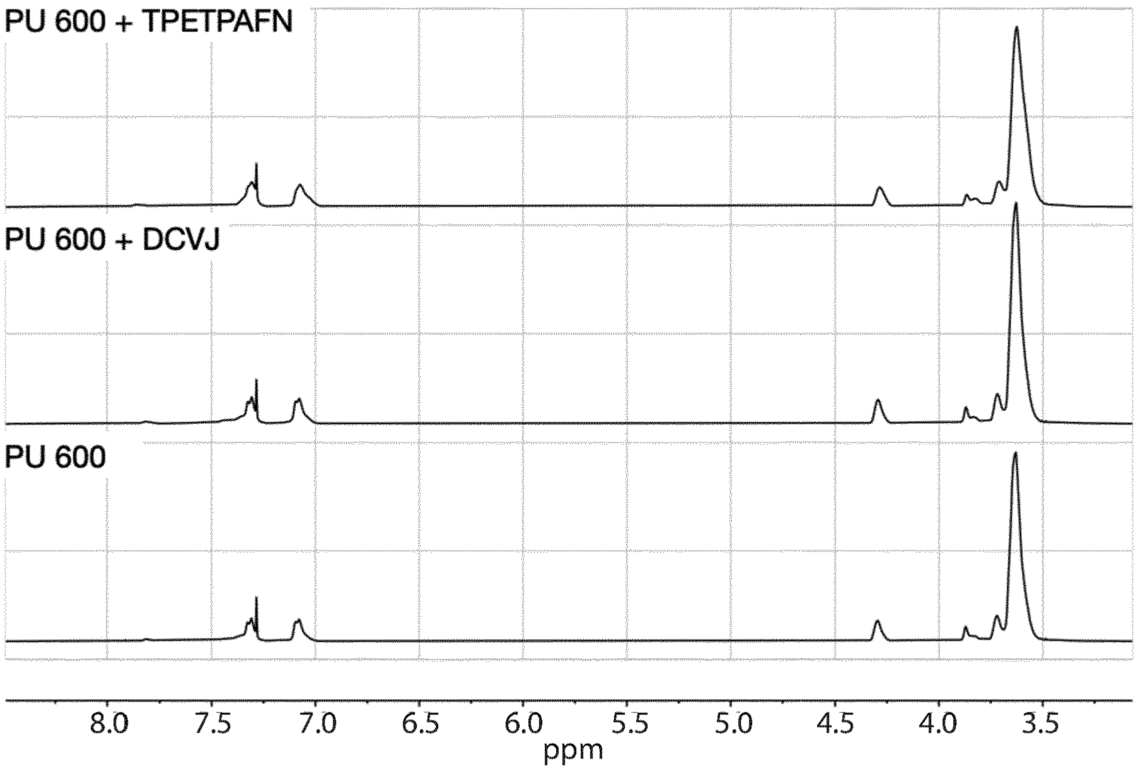
PU 600 + TPETPAFN
PU 600 + DCVJ
PU 600
8.0 7.5 7.0 6.5 6.0 5.5 5.0 4.5 4.0 3.5
ppm

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019191078 A
- US 5100802 A


### Non-patent literature cited in the description


- **ÇATAL-GIZ H. et al.** *J. Appl. Polym. Sci.,* 2001, vol. 82, 2070-2077
- **WANG S. et al.** *Macromolecules,* 2002, vol. 35, 883-888
- **HAKALA K. et al.** *Macromolecules,* 2000, vol. 33, 5954-5959
- **BOSCH P. et al.** *Macromol. Chem. Phys.,* 2002, vol. 203, 336-345
- **PEINADO C. et al.** *Macromol. Chem. Phys.,* 2001, vol. 202, 1924-1934
- **GONZÁLEZ-BENITO J. et al.** *J. Appl. Polym. Sci.,* 2002, vol. 86, 2992-3000
- **LOUTFY RO.** *Pure & Appl. Chem.,* 1986, vol. 58 (9), 1239-1248
- **HAIDEKKER, MA et al.** *Bioorg. Chem.,* 2005, vol. 33, 415-425
- **LUO J. et al.** *Chem. Commun.,* 2001, 1740
- **HONG Y. et al.** *Chem. Soc. Rev.,* 2011, vol. 40, 5361-5388
- **LIU S. et al.** *Angew. Chem. Int. Ed.,* 2018, vol. 57, 6274-6278